# EUROPEAN PATENT SPECIFICATION

(11) **EP 2 343 344 B1**
(45) Date of publication and mention of the grant of the patent: **07.03.2018**
(21) Application number: 10150308.4
(22) Date of filing: 08.01.2010
(51) Int. Cl.: C09D 5/02, C09D 7/12, C09C 3/10, C09C 1/36, C08K 3/00, C09B 67/08, C09B 67/02, C08K 9/10

(54) **ENCAPSULATION OF PIGMENTS WITH POLYMER LATEX PREPARED BY MINI-EMULSION POLYMERIZATION**
EINKAPSELUNG VON PIGMENTEN MIT POLYMERLATEX, DAS MITTELS MINIEMULSIONSPOLYMERISATION HERGESTELLT WIRD
ENCAPSULATION DE PIGMENTS AVEC DU LATEX POLYMÈRE PRÉPARÉ PAR POLYMÉRISATION DE MINI-ÉMULSIONS

(43) Date of publication of application: 13.07.2011
(73) Proprietor: Akzo Nobel Coatings International B.V., 6824 BM Arnhem (NL)
(72) Inventor: Xu, Peng, SHANGHAI 200434 (CN); Murray, Martin W., GUISBOROUGH, Cleveland TS14 7LW (GB)
(74) Representative: Akzo Nobel IP Department

(56) References cited:
- WO-A1-2006/041658
- WO-A1-2007/112503
- US-A1- 2007 141 247
- US-A1- 2007 265 372
- US-A1- 2009 317 647

## Description

### FIELD OF THE INVENTION

This invention concerns paints that comprise polymer-encapsulated pigments. More particularly this invention relates to a method of efficiently encapsulating inorganic pigment particles within a polymer latex, wherein those pigment particles can include particles having a mean particle diameter of greater than 200 nm.

### BACKGROUND OF THE INVENTION

Polymer encapsulated pigments, wherein a layer of polymer or latex material is deposited on or attached to the surface of a pigment particle either directly or via an intermediate bridging layer, are well known in the colorant art.

Methods for encapsulating inorganic pigments in a polymer have been disclosed in US 2007/0141247, WO 2007/112503, WO 2006/041658 and US2009/0317647. Printing inks represent the primary use of polymer-encapsulated pigments where such pigments provide a number of application advantages. For instance, the polymer encapsulation of pigments may serve to reduce the total number of particles in dispersion - and thereby the combined surface area of the particles - such that viscosity of an ink can be reduced when compared to an ink having separately dispersed latex and pigment particles. Polymer-encapsulation may also provide for more uniform charging of the particle surfaces in the dispersion, therefore rendering the ink more stable. Encapsulation also prevents pigment-latex separation when the ink is applied to a media, thereby improving the durability and optical density of the ink. And furthermore, when the ink is applied to the media, the latex tends to form a film which traps the previously encapsulated pigments below it: This serves to enhance the gloss of the resultant films.

Many of the benefits of pigment encapsulation to ink applications would be equally desirable in paint applications. However, many of the pigment particles used in paints are characterised by a larger average diameter than those used in inks. For example, the majority of white and chromatic inorganic pigments in paint have mean particle diameters of greater than 500 nm whereas pigments in ink tend to be prepared with mean particle sizes of 100 nm or less. The larger pigment particles of paint are distinguished by having adsorption enthalpies and specific interactions with monomers or polymers which have heretofore made successful or efficient polymer encapsulation impossible. The encapsulation method of US Patent Application Publication No. 2007/0265372 (Hewlett Packard) and that of Steiert et al. in Macromolecular Materials and Engineering, Volume 292, Issue 10-11, Pages 1111-1125 are both noticeably limited to pigment particles having sizes of less than 200 nm.

US Patent Application Publication No. 2007/0265372 describes a process for preparing an inkjet ink comprising the steps of: providing a first dispersion comprising water, at least one particulate pigment and, optionally a surfactant; providing a second dispersion of at least one monomer and a surfactant; separately homogenizing the pigment and monomer dispersions; mixing the two dispersions and homogenizing the mixture to produce microcapsules of pigment surrounded by monomer; and polymerizing the homogenized mixture.

Steiert et al. provides a coating synthesis method whereby organic pigments are encapsulated within polymers, said method including the steps of: Providing a cationically stabilized dispersion of the organic pigment in water and homogenizing that dispersion using sonication; providing a second aqueous dispersion of styrene, an acrylic monomer, hexadecane and an anionic surfactant and homogenizing that dispersion using sonication; mixing the first and second aqueous dispersions by a cycle of stirring and pulse sonication; and, polymerizing the monomers.

There presently exists a need in the art to find a general method for successfully encapsulating larger inorganic pigment particles with high encapsulation efficiency.

### STATEMENT OF THE INVENTION

The present application provides a paint composition obtainable by mini-emulsion polymerization comprising a polymer latex in which polymer particles have particles of inorganic pigment encapsulated therein, at least one encapsulated inorganic pigment having a mean particle diameter of from 200 nm to 10µm.

In accordance with the present invention there is provided a process for preparing a polymer latex comprising encapsulated pigment particles, said process comprising the steps of: a) Providing a first dispersion comprising water, at least one surfactant and at least one particulate, inorganic pigment of which the particles have a mean diameter of from 200 nm to 10 µm; b) Providing a second dispersion comprising water, a dispersant, a hydrophobe and at least two polymerizable monomers, of which monomers at least one is an acrylic monomer; c) Independently homogenizing the first and / or second dispersion; d) Mixing said first and second dispersions and homogenizing said mixture until the particles of pigment are encapsulated by monomer droplets; and e) Initiating polymerization of the monomers, wherein the dispersant of the second dispersion is an amphiphilic polymer selected from the group consisting of polyvinylpyrrolidone; alkylated polyvinylpyrrolidone; polyethylene glycol; poly(vinylpyrrolidone-co-vinyl acetate); poly(styrene sulfonate); poly(-diallyldimethylammoniumchloride); poly(ethylene-co-methacrylic acid); poly(ethylene-co-maleic acid); poly(styrene-co-maleic acid); polyvinylimidazole); block and random copolymers of the aforementioned polymers; and mixtures thereof. The colloidal dispersions obtained by the method of the present invention are characterized by excellent stability, especially during the dynamic polymerization process. As a consequence of this colloidal stability, the formulator of a paint can readily modify the energy inputted either into the homogenization of step d) or into any stirring or agitation applied during step e) to control and / or enhance the encapsulation efficiency and more particularly the degree of mono-encapsulation of pigment particles by polymer.

In a first preferred embodiment of the process, the at least two polymerizable monomers comprise at least one acrylic monomer and at least one other monomer being vinyl acetate, styrene or another non-acrylic monomer comprising a polymerizable double bond.

In a further preferred embodiment of the process, step c) entails the separate homogenization of the first and second dispersions. The separate homogenization of the first and / or second dispersions, and / or the homogenization of the mixed dispersions of step d) should ideally be performed using high energy techniques of which sonication is most preferred.

There is disclosed a paint composition comprising a polymer latex prepared in accordance with the aforementioned process. The paint composition may furthermore be characterised in that at least 70%, and preferably at least 90%, of those polymer particles having pigment encapsulated therein have only one inorganic pigment particle therein.

### DEFINITIONS

As used herein and in the appended claims, the terms "sonicate" or "sonication" will be understood to mean a process of exposing a suspension to the disruptive effect of the energy of high frequency sound waves.

The "mean particle diameter" used herein is a 50% particle diameter determined upon calculation of volume average particle diameter from measurements obtained, most suitably, using a Coulter LS230 Particle Sizer.

### DESCRIPTION OF THE DRAWING

The invention will be described with reference to the appended drawing.
Fig. 1 illustrates one embodiment of the mini-emulsion process used to encapsulate the particles of inorganic pigment within a polymer latex.
Fig. 2 is a Transmission Electron Micrograph (TEM) of a polymer latex prepared in accordance with the process of the present invention.

### DETAILED DESCRIPTION OF THE INVENTION

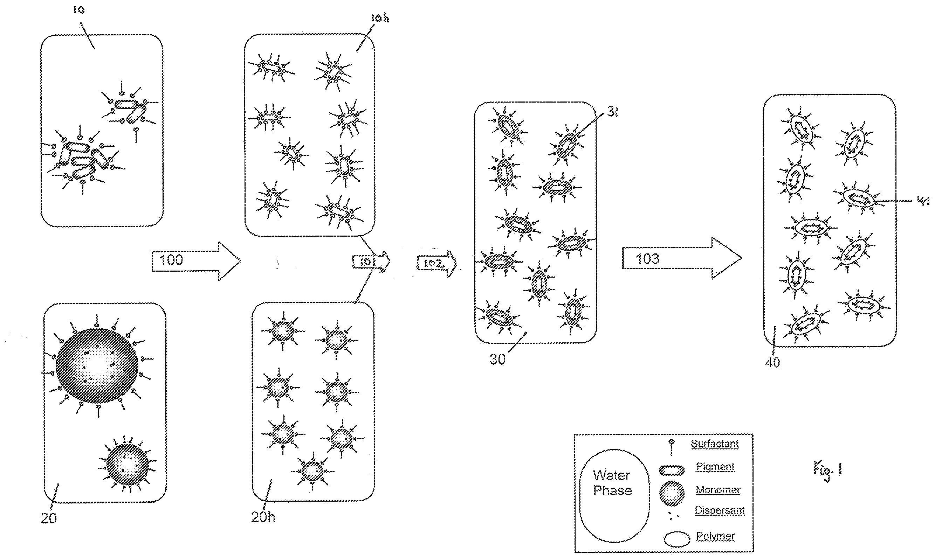

### PROVISION OF THE FIRST DISPERSION (10, FIG.1)

In the initial step of the recited process, the one or more pigments are either provided in a pre-dispersed form or are dispersed in water using a suitable apparatus in the presence of the at least one surfactant and optional further additives. Although salt-containing water may be used as the dispersion medium, it is preferable to use completely ion-free water, which is obtainable by ion exchange or by distillation for example.

The first dispersion of the present invention utilizes one or more inorganic pigments in particulate form. Suitable inorganic pigments are listed in Table 1 below but it is not intended that the invention be limited to those specific pigments mentioned.

**Table 1**

| **PIGMENT TYPES** | **EXAMPLES** |
|---|---|
| White Pigments | Titanium dioxide (e.g. C.I. Pigment White 6); zinc white, pigment grade zinc oxide; zinc sulphide; lithopone; and, lead white. |
| Black Pigments | Iron oxide black (C.I. Pigment Black 11); iron manganese black; spinell black (C.I. Pigment Black 27); and, carbon black (C.I. Pigment Black 7). |
| Chromatic pigments | Chromium oxide; chromium oxide hydrate green; chrome green (C.I. Pigment Green 48); cobalt green (C.I. Pigment Green 50); ultramarine green; cobalt blue (C.I. Pigment Blue 28 and 36); ultramarine blue; iron blue (C.I. Pigment Blue 27); manganese blue; ultramarine violet; cobalt violet; manganese violet; iron oxide red (C.I. Pigment Red 101); cadmium sulfoselenide (C.I. Pigment Red 108); molybdate red (C.I. Pigment Red 104); ultramarine red; iron oxide brown, mixed brown, spinell and corundum phases (C.I. Pigment Brown 24, 29 and 31); chrome orange; iron oxide yellow (C.I. Pigment Yellow 42); nickel titanium yellow (C.I. Pigment Yellow 53, 157 and 164); chrome titanium yellow; cadmium sulfide and cadmium zinc sulfide (C.I. Pigment Yellow 37 and 35); chrome yellow (C.I. Pigment Yellow 34), zinc yellow; alkaline earth metal chromates; Naples yellow; and, bismuth vanadate (C.I. Pigment Yellow 184). |
| Interference pigments | Metallic effect pigments based on coated metal platelets; pearl lustre pigments based on mica platelets coated with metal oxide; liquid crystal pigments. |

The surfactants used in this first dispersion may be selectively anionic, cationic or nonionic surfactants and suitable surfactants are described *inter alia* in Houben-Weyl, Methoden der Organischen Chemie, Volume XIV/1 (Makromolekulare Stoffe), Georg-Thieme-Verlag Stuttgart 1961, pages 192-208.

Exemplary nonionic surfactants include ethoxylated mono-, di- and trialkylphenols (degree of ethoxylation: 3 to 50, alkyl radical: C₄-C₁₂) and ethoxylated fatty alcohols (degree of ethoxylation: 3 to 80; alkyl radical: C₈-C₃₆) which are available under the Lutensol® and Triton® brands of BASF Aktiengesellschaft and Union Carbide respectively.

Exemplary anionic surfactants include the alkali metal and ammonium salts of: alkyl sulfates (alkyl radical: C₈ to C₁₂); acid sulfuric esters of ethoxylated alkanols (degree of ethoxylation: 4 to 30, alkyl radical: C₁₂-C₁₈) and ethoxylated alkylphenols (degree of ethoxylation: 3 to 50, alkyl radical: C₄-C₁₂); alkylsulfonic acids (alkyl radical: C₁₂-C₁₈); and, alkylarylsulfonic acids (alkyl radical: C₉-C₁₈).

Exemplary cationic surfactants include C₆-C₁₈ alkyl-, -aralkyl- or heterocycyl-containing primary, secondary, tertiary or quaternary ammonium salts, alkanol ammonium salts, pyridinium salts, imidazolinium salts, oxazolinium salts, morpholinium salts, thiazolinium salts and also salts of amine oxides, quinolinium salts, isoquinolinium salts, tropylium salts, sulfonium salts and phosphonium salts. Specific examples which may be mentioned are dodecylammonium acetate or the corresponding hydrochloride, the chlorides or acetates of the various 2-(N,N,N-trimethylammonium)ethylparaffinic esters, N-cetylpyridinium chloride, N-laurylpyridinium sulfate and also N-cetyl-N,N,N,-trimethylammonium bromide, N-dodecyl-N,N,N-trimethylammonium bromide, N,N-distearyl-N,N-dimethylammonium chloride and also N,N-(lauryldimethyl)ethylenediamine dibromide. Further representative examples may be found in McCutcheon's, Surfactants & Detergents, MC Publishing Company, Glen Rock, 1989.

The further additives that may optionally be included in the first, or pigment dispersion include biocides and grinding agents. Suitable biocides include 1,2-benzisothiazolin-3-one (BIT) (commercially available as Proxel™ from Avecia) or its alkali metal salts; 2-methyl-2H-isothiazole-3 (MIT); and, 5-chloro-2-methyl-2H-isothiazol-3-one (CIT).

In providing the first dispersion (10), the water, pigment(s), surfactant(s) and optional further additives are fed into milling or stirring devices such as ball mills, stirred media mills, ultrasonifiers, high pressure homogenizers or Ultra Thurax stirrers. Although the predispersing time - or the residence time in these devices - may of course be longer, it will typically be less than 48 hours and will more usually be in the range from 1 to 24 hours. The pressure and temperature conditions of this pre-dispersion step are not generally critical and atmospheric pressure and temperatures in the range from 10°C and 100°C have been found to be suitable.

The weight ratio of inorganic pigments to water which is used in the first dispersion can be chosen within quite wide limits but in most instances will fall in the range from 1:10 to 1:2.

The average diameter of the inorganic pigment particles is in the range from 200 nm to 10 µm, preferably in the range from 250 nm to 1 µm and more preferably in the range from 300 to 750 nm after predispersing. Where carbon black is used as the, or one of the inorganic pigments, the average particle diameter refers to the average diameter of the primary particles.

The total amount of surfactant in the first (10) and second (20) dispersions (discussed hereinbelow) is chosen to ensure that the critical micelle formation concentration of the surfactants concerned is not significantly exceeded in the aqueous mini-emulsion ultimately formed. Generally the amount of surfactant added in the first dispersion (10) will be up to 30% by weight, preferably up to 20% by weight and more preferably up to 10% by weight, based on total weight of the first dispersion (10). In a specific embodiment of the present invention, the amount of surfactant in the first dispersion (10) is in the range from 0.05% to 5% by weight, based on total weight of the first dispersion.

### PROVISION OF THE SECOND DISPERSION (20, FIG. 1)

In the further introductory step of the recited process, a second dispersion of a monomer mixture is provided in a pre-dispersed form or is dispersed in water using a suitable apparatus in the presence of at least one dispersant, a hydrophobe and optional further additives. Again, although salt-containing water may be used as the dispersion medium, it is preferable to use completely ion-free water.

The monomer mixture comprises at least two polymerizable monomers of which at least one is an acrylic monomer. For instance, the monomer mixture may comprise two polymerizable monomers both of which are acrylic monomers. Preferably, the at least two polymerizable monomers comprise at least an acrylic monomer and one other monomer being vinyl acetate, styrene or another non-acrylic monomer comprising a polymerizable double bond.

The form of the acrylic monomer present in the second dispersion is not intended to be limited and as such monofunctional and / or polyfunctional acrylic monomers may be used. Exemplary acrylic monomers may be selected from acrylic acid, methacrylic acid, monofunctional acrylate and methacrylate esters and the hydroxy, amide, cyano, chloro or silane substituted derivatives thereof.

With regard to the ester monomers, preferred are the alkyl esters of acrylic acid or methacrylic acid derived from C₁ to C₁₄ alcohols, thereby including as non-limiting examples: methyl acrylate; methyl methacrylate; ethyl acrylate; ethyl methacrylate; n-butyl acrylate; n-butyl methacrylate; 2-ethylhexyl acrylate; 2-ethylhexyl methacrylate; isopropyl acrylate; isopropyl methacrylate; hydroxyethyl methacrylate; hydroxyethyl ethacrylate; hydroxypropyl methacrylate; n-propyl acrylate; n-propyl methacrylate; and, di(meth)acrylate esters of alkane diols such as 1,6-hexane diol diacrylate.

In a preferred form of the second dispersion (20), the at least one acrylic monomer thereof is selected from the group consisting of: acrylic acid; methacrylic acid (MAA); methylmethacrylate (MMA); butyl acrylate (BA); hydroxyethyl ethacrylate (HEA); and, hydroxyethyl methacrylate (HEMA).

In place of or in addition to vinyl acetate or styrene, non-acrylic monomers comprising a polymerizable double bond which are suitable for use in the second dispersion include: vinyl propionate; vinyl butyrate; vinyl butyl ether; vinyl propyl ether; ethylene; vinyl carbazole; vinyl naphthalene; vinyl anthracene; vinyl pyrene; alpha-methyl styrene; dimethylstyrene; methylstyrene; vinylbiphenyl 2-methyl-2-vinyl oxirane; vinyl pyridine; and mixtures thereof.

A person skilled in the art of dispersing oil droplets in water or dispersing particles within target liquids will be aware of suitable dispersants for inclusion in the second dispersion (20). However, the dispersant is an amphiphilic polymer which is selected for process compatibility with the mini-emulsion polymerization process. Amphiphilic polymers used with the compositions and methods described herein are selected from the group consisting of : polyvinylpyrrolidone; alkylated polyvinylpyrrolidone; polyethylene glycol; poly(vinylpyrrolidone-co-vinyl acetate); poly(styrenesulfonate); poly(diallyldimethylammonium chloride); poly(ethylene-co-methacrylic acid); poly(ethylene-co-maleic acid); poly(styrene-co-maleic acid); poly(vinylimidazole); block and random copolymers of the aforementioned polymers; and, mixtures thereof.

The amphiphilic polymer should have a weight average molecular weight (M_{w}) of at least 1,000, generally at least 25,000, preferably at least 50,000 and more preferably at least 100,000. In still yet another embodiment, the weight average molecular weight of the amphiphilic polymer is at least 500,000.

As is known in the art, a hydrophobe should be included in the monomer phase to increase the stability of the monomer droplets: In a mini-emulsion polymerization in which an initiating radical is employed, the stabilizing presence of the hydrophobe serves to preserve the monomer droplets up to high conversion. Useful hydrophobes include materials whose solubility in water is less than 5x10⁻⁵ g/l either at 25°C or under the process conditions of this invention. Particularly suitable hydrophobes include n-hexadecane, n-tetradecane, n-dodecahedrane, lauryl(dodecyl) alcohol, tetradecanol, 1-hexadecanol, octadecanol, and mixtures thereof and these should be included in the second dispersion in an amount of from 0.01 wt.% to 5.0 wt.% based on total weight of that dispersion.

With regard to further additives, the second dispersion may optionally comprise a surfactant which adheres to the surface of the monomer droplets: The surfactant may be the same or different to that employed in the first dispersion. The second dispersion may also comprise a cross-linking agent: Examples of suitable agents include polyvinyl, typically di- or tri-vinyl monomers such as divinyl benzene. Moreover, the second dispersion may optionally comprise a co-solvent selected from the classes of aliphatic alcohols, aromatic alcohols, diols, glycol ethers, polyglycol ethers, caprolactams, formamides, acetamides, and long chain alcohols. Exemplary compounds from these classes include primary aliphatic alcohols, secondary aliphatic alcohols, 1,2-alcohols, 1,3-alcohols, 1,5-alcohols, ethylene glycol alkyl ethers, propylene glycol alkyl ethers, higher homologs of polyethylene glycol alkyl ethers, N-alkyl caprolactams, unsubstituted caprolactams, both substituted and unsubstituted formamides, both substituted and unsubstituted acetamides, and the like. Preferred examples of co-solvents that can be used include trimethylolpropane, 2-pyrrolidinone, and 1,5-pentanediol.

### FURTHER METHOD STEPS

Referring to the embodiment illustrated in Fig.1, the first (10) and second (20) dispersions provided as above are separately homogenized in step 100. It is preferable that this homogenization (step 100) is performed by sonication - using a Branson Ultrasonicator Model 450 for example - but other high energy methods, using micro-fluidizers and the like, may also be employed.

The first and second dispersions (10, 20) are homogenized separately for a period of time typically between 5 seconds and 15 minutes. The homogenization will separate any agglomeration of the pigment particles in the pigment dispersion (10h) and will form fine droplets in the monomer pre-emulsion (20h) by breaking down the large monomer drops. After the initial separate homogenization steps, the two dispersions (10h, 20h) are mixed (step 101). The mixture obtained is then itself homogenized (step 102).

Broadly the mixing (101) and homogenization (102) steps serve to further break up monomer droplets until they are hetero-aggregated into the inorganic pigment particles, thus forming microcapsules (31) of the inorganic pigment surrounded by monomer.

At a finer level within the microcapsules, the amphiphilic polymer dispersant becomes attached to the surface of the inorganic pigment particle through its hydrophilic structure: the dispersant is said to passivate the pigment surface and creates a seed layer for monomer encapsulation. That "passivation layer" will also create a suitable surface for subsequent polymer attachment. The hydrophobic structure of the amphiphilic polymer can stabilize the pigment particle within the monomer droplet which forms the "medium" of the microcapsules (31).

Without being bound by theory, the hydrophobe originally present with the second dispersion (20, 20h) will remain distributed within that monomer medium thereby maintaining its stabilizing function.

The energy employed in the homogenization step 102 is an important factor in determining the number of particles of inorganic pigment retained within a single monomer droplet. At higher energies, the homogenization step 102 could split a bigger monomer drop into such small droplets so that eventually there is only one pigment particle in a micro-droplet (mon-encapsulation).

In the present invention, homogenization (102) by sonication for a period of between 5 seconds and 25 minutes has been found to be particularly suitable for achieving a high level of mono-encapsulation. In this circumstance, micro-capsules (i.e. inorganic pigment plus organic monomer shell) having a mean diameter from about 300 nm to about 12µm can readily be obtained.

After the mixture has been homogenized (step 102), the resultant pigment-in-oil dispersion (30) is polymerized (step 103) to encapsulate the pigment or colorant particles in the mixed dispersion. The polymerization may be effected by a suitable initiation system, for instance a thermal initiator, a UV initiator or other photoinitiator.

A particularly suitable technique for initiating the polymerization is to elevate the temperature of the mixture to between 70° or 80°C before, whilst or after adding from 0.01 to 5.0 wt.% (based on the total weight of monomers present) of ammonium or potassium persulfate or an azo compound such as 2,2'-azobisisobutyronitrile (AIBN), 2,2'-azobis(2-methylpropionamidine) dihydrochloride and 2,2'-azobis(4-methoxy-2,4-dimethylvaleronitrile).

As an alternative to this technique, an organic peroxide or hydroperoxide may be used as an initiator, of which suitable examples include di-tert-butyl peroxide, tert-butyl peroctanoate, tert-butyl perpivalate, tert-butylper-2-ethylhexanoate, tert-butyl permaleate, tert-butyl perisobutyrate, benzoyl peroxide, diacetyl peroxide, succinyl peroxide, p-chlorobenzoyl peroxide and dicyclohexyl peroxide dicarbonate.

As is also known in the art, redox initiators may similarly be used, for instance a combination of hydrogen peroxide, sodium peroxodisulfate or one of the aforementioned peroxides with a reducing agent such ascorbic acid, tartaric acid, an Fe(II) salt, sodium bisulfite or potassium bisulfite.

Where it is desirable for the polymerization step (103) to be carried out at room temperature, a photo-initiator may be employed. Examples of suitable photoinitiators may be found in P.K.T. Old-Ring, Chemistry and Technology of UV and EB Formulations for Coatings, Inks and Paints, SITA Technology, London 1991, Volume 3, "Photoinitiators for Free Radical and Cationic Polymerisation".

The peroxide, redox or photoinitiators, when employed, will typically be added to the pigment-in-oil dispersion (30) in an amount of from 0.1 wt.% to 4 wt.% based on the total weight of monomers present.

The polymerization step (103) forms a primary dispersion (40) of the inorganic pigment particles, said particles having been encapsulated by polymer. During the polymerization it is possible that individual microcapsules within the pigment-in-oil dispersion (30) may aggregate: This could lead to a morphology whereby more than one inorganic pigment particle will become encapsulated in one polymer latex of greater size than the original individual microcapsules. Where this result is not desired, agglomeration can be controlled during polymerization by stirring or otherwise agitating the reaction vessel with an appropriate force.

Under such stirring or agitation it has been found that mono-encapsulation of the inorganic pigment particles in the polymer latex can be efficiently achieved. Moreover, in this circumstance, the particles in the primary dispersion (40) can be prepared at a size similar to the size of the micro-capsules (i.e. inorganic pigment plus organic monomer shell, 31) before polymerization.

In the course of the polymerization step (103) it may be sensible to conduct one or more deodorizing operations. In particular, subsequent additions of the aforementioned initiators may be made if or when the polymerization reaction has died down from its initial rate.

After the primary dispersion (40) has been prepared, certain work-up steps may be carried out as is common in the art of paint manufacture. For example, the dispersion may be filtered through one or more woven, mesh or net materials.

### EXAMPLE

In this Example sonication was performed using a Branson Ultrasonicator Model 450.

The components of the first dispersion (10) of this Example are shown in Table 2 below.

**Table 2**

| **FIRST DISPERSION** | **MASS (g)** |
|---|---|
| Water | 74.11 |
| Sodium dodecyl sulphate (SDS) | 0.07 |
| Sodium hydrogen carbonate (NaHCO₃) | 0.11 |
| TiO₂ | 20.00 |

In a first 200 ml jar, 20.00g of TiO₂ nano-particles (RTC90 available from Huntsman, Billingham, UK; mean particle diameter 200 to 240 nm) were mixed under stirring with water, surfactant (SDS) and additive.

The components of the second dispersion (20) of this Example are shown in Table 3 below.

**Table 3**

| **SECOND DISPERSION** | **MASS (g)** |
|---|---|
| OIL PHASE COMPONENTS | |
| Methylmethacrylate (MMA) | 4.80 |
| Methylacrylic Acid (MAA) | 0.09 |
| Hexadecane | 0.22 |
| Alkylated polyvinylpyrrolidone | 1.21 |
| (ANTARON AV220 made by ISP Technologies) | |
| Divinyl benzene | 0.11 |
| | |
| WATER PHASE COMPONENTS | |
| Water | 65.98 |
| Sodium dodecyl sulphate (SDS) | 0.06 |
| Sodium hydrogen carbonate (NaHCO₃) | 0.10 |

In a separate 200 ml jar, the oil phase components and the water phase components were mixed under stirring. The resultant mixture was sonicated for 10 minutes to form a monomer mini-emulsion

The sonicated pigment dispersion and monomer mini-emulsion were then mixed together, and the full mixture was again sonicated for 20 minutes. The resulting mixture was charged into a 1L reactor equipped with a stirrer and a condenser. An initiator solution comprising 0.08g of potassium persulfate dissolved in 3.19g of water was dosed into the reactor which was then heated to 75°C and maintained at that temperature for 5 hours. At the completion of this process, the dispersion was cooled by tap water.

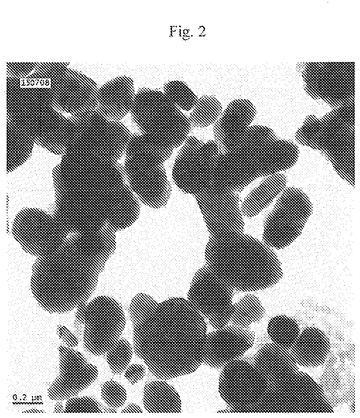

Fig. 2 appended hereto is a transmission electron micrograph (TEM) of the resultant latex which illustrates the encapsulation of the pigment within the polymer particles.

## Claims

1. A process for preparing a polymer latex comprising encapsulated pigment particles, said process comprising the steps of:
a) Providing a first dispersion comprising water, at least one surfactant and at least one particulate, inorganic pigment of which the particles have a mean diameter of from 200 nm to 10 µm, the mean particle diameter being a 50% particle diameter determined upon calculation of volume average particle diameter from measurements obtained using a coulter LS230 Particle Sizer.
b) Providing a second dispersion comprising water, a dispersant, a hydrophobe and at least two polymerizable monomers, of which monomers at least one is an acrylic monomer;
c) Independently homogenizing the first and / or second dispersion;
d) Mixing said first and second homogenized dispersions and homogenizing said mixture until the particles of pigment are encapsulated by monomer droplets; and
e) Initiating polymerization of the monomers,
wherein the dispersant of the second dispersion is an amphiphilic polymer selected from the group consisting of: polyvinylpyrrolidone; alkylated polyvinylpyrrolidone; polyethylene glycol; poly(vinylpyrrolidone-co-vinyl acetate); poly(styrenesulfonate); poly(diallyldimethylammonium chloride); poly(ethylene-co-methacrylic acid); poly(ethylene-co-maleic acid); poly(styrene-co-maleic acid); poly(vinylimidazole); block and random copolymers of the aforementioned polymers; and, mixtures thereof.

2. The method according to claim 1, wherein the acrylic monomer of the second dispersion is selected from the group consisting of: acrylic acid; methacrylic acid (MAA); methylmethacrylate (MMA); butyl acrylate (BA); hydroxyethyl ethacrylate (HEA); and, hydroxyethyl methacrylate (HEMA).

3. The method according to claim 1 or claim 2, wherein said at least two polymerizable monomers comprise at least one acrylic monomer and at least one other monomer being vinyl acetate, styrene or another non-acrylic monomer comprising a polymerizable double bond.

4. The method according to claim 3, wherein the non-acrylic monomer comprising a polymerizable double bond is selected from the group consisting of: vinyl propionate; vinyl butyrate; vinyl butyl ether; vinyl propyl ether; ethylene; vinyl carbazole; vinyl naphthalene; vinyl anthracene; vinyl pyrene; alpha-methyl styrene; dimethylstyrene; methylstyrene; vinylbiphenyl 2-methyl-2-vinyl oxirane; vinyl pyridine; and mixtures thereof.

5. The method according to any one of claims 1 to 4, wherein the second dispersion further comprises a surfactant and / or a cross-linking agent.

6. The method according to any one of claims 1 to 5, wherein both the first and second dispersions are independently homogenized.

7. The method according to any one of claims 1 to 6, wherein in step c) the first and / or second dispersions are independently homogenized by sonication.

8. The method according to any one of claims 1 to 7, wherein in step d) the homogenization is performed by sonication.

9. The method according to any one of claims 1 to 8, wherein the polymerization is initiated by:
adding to the mixture formed in step d) from 0.01 to 5.0 wt.%, based on the total weight of monomers present, of ammonium or potassium persulfate or an azo compound selected from the group consisting of 2,2'-azobisisobutyronitrile (AIBN), 2,2'-azobis(2- methylpropionamidine) dihydrochloride and 2,2'-azobis(4-methoxy-2,4-dimethylvaleronitrile); and
elevating the temperature of the mixture to a temperature of from 70° to 80°C.

10. The method according to any one of claims 1 to 9, wherein the polymerization occurs under stirring or agitation of the reaction mixture.

## Patentansprüche

1. Verfahren zur Herstellung eines Polymerlatex mit eingekapselten Pigmentpartikeln, wobei das Verfahren die folgenden Schritte umfasst:
a) Bereitstellen einer ersten Dispersion mit Wasser, mindestens einem Tensid und mindestens einem partikelförmigen anorganischen Pigment, dessen Partikel einen mittleren Durchmesser von 200 mn bis 20 µm aufweisen, wobei der mittlere Partikeldurchmesser ein 50% Partikeldurchmesser ist, der nach Berechnung eines Durchschnittsvolumen-Partikeldurchmessers aus Messungen bestimmt wird, welche unter Einsatz eines Coulter LS230 Particle Sizers erhalten werden,
b) Bereitstellen einer zweiten Dispersion mit Wasser, einem Dispersionsmittel, einem Hydrophob und mindestens zwei polymerisierbaren Monomeren, wobei mindestens eines der Monomere ein Acrylmonomer ist;
c) unabhängig Homogenisieren der ersten und/oder zweite Dispersion;
d) Vermischen der ersten und zweiten homogenisierten Dispersion und Homogenisieren der Mischung, bis die Pigmentpartikel von Monomertröpfchen eingekapselt sind; und
e) Einleiten der Polymerisierung der Monomere,
wobei das Dispersionsmittel der zweiten Dispersion ein amphiphiles Polymer darstellt, ausgewählt aus der Gruppe bestehend aus: Polyvinylpyrrolidon; alkyliertem Polyvinylpyrrolidon; Polyethylenglykol; Poly(vinylpyrrolidon-Co-Vinylacetat); Poly(styrolsulfonat); Poly(diallyldimethylammoniumchlorid); Poly(ethylen-Co-Methacrylsäure); Poly(ethylen-Co-Maleinsäure); Poly(styrol-Co-Maleinsäure); Poly(vinylimidazol); Block- und Zufalls-Copolymeren der vorgenannten Polymere sowie Mischungen aus diesen.

2. Verfahren nach Anspruch 1, wobei das Acrylmonomer der zweiten Dispersion aus der Gruppe bestehend aus: Acrylsäure; Methacrylsäure (MAA); Methylmethacrylat (MMA); Butylacrylat (BA); Hydroxyethylethacrylat (HEA) sowie Hydroxyethylmethacrylat (HEMA) ausgewählt ist.

3. Verfahren nach Anspruch 1 oder Anspruch 2, wobei die mindestens zwei polymerisierbaren Monomere mindestens ein Acrylmonomer und mindestens ein anderes Monomer umfassen, das aus Vinylacetat, Styrol oder einem weiteren nicht-Acrylmonomer mit einer polymerisierbaren Doppelbindung besteht.

4. Verfahren nach Anspruch 3, wobei das nicht-Acrylmonomer mit einer polymerisierbaren Doppelbindung aus der Gruppe bestehend aus: Vinylpropionat; Vinylbutyrat; Vinylbutylether; Vinylpropylether; Ethylen; Vinylcarbazol; Vinylnaphthalen; Vinylanthracen; Vinylpryren; Alpha-Methylstyrol; Dimethylstyrol; Methylstyrol; Vinylbiphenyl-2-Methyl-2-Vinyloxiran; Vinylpyridin sowie Mischungen aus diesen ausgewählt ist.

5. Verfahren nach einem der Ansprüche 1 bis 4, wobei die zweite Dispersion weiterhin ein Tensid und/oder ein Vernetzungsmittel umfasst.

6. Verfahren nach einem der Ansprüche 1 bis 5, wobei sowohl die erste als auch die zweite Dispersion unabhängig homogenisiert werden.

7. Verfahren nach einem der Ansprüche 1 bis 6, wobei in Schritt c) die erste und/oder zweite Dispersion durch Ultraschallbehandlung unabhängig homogenisiert wird/werden.

8. Verfahren nach einem der Ansprüche 1 bis 7, wobei in Schritt d) die Homogenisierung durch Ultraschallbehandlung durchgeführt wird.

9. Verfahren nach einem der Ansprüche 1 bis 8, wobei die Polymerisierung eingeleitet wird durch:
Zusetzen zu der in Schritt d) gebildeten Mischung zwischen 0,01 und 5,0 Gew-%, bezogen auf das Gesamtgewicht vorliegender Monomere, Ammonium- oder Kaliumpersulfat oder einer Azoverbindung ausgewählt aus der Gruppe bestehend aus 2,2'-Azobisisobutyronitril (AIBN), 2,2'-Azobis(2-Methylpropionamidin) Dihydrochlorid und 2,2'-Azobis(4-Methoxy-2,4-Dimethylvaleronitril); sowie
Erhöhen der Temperatur der Mischung auf eine Temperatur zwischen 70° und 80°C.

10. Verfahren nach einem der Ansprüche 1 bis 9, wobei die Polymerisierung unter Rühren oder Schütteln des Reaktionsgemisches stattfindet.

## Revendications

1. Procédé de préparation d'un latex polymère comprenant des particules de pigment encapsulées, ledit procédé comprenant les étapes consistant :
a) à fournir une première dispersion comprenant de l'eau, au moins un tensioactif et au moins un pigment inorganique particulaire dont les particules ont un diamètre moyen compris entre 200 nm et 10 µm, le diamètre moyen de particules étant les 50% de diamètre particulaire,déterminé lors du calcul du diamètre moyen en volume des particules à partir des mesures obtenues en utilisant un granulomètre Coulter LS230.
b) à fournir une deuxième dispersion comprenant de l'eau, un dispersant, un hydrophobe et au moins deux monomères polymérisables, dont au moins l'un est un monomère acrylique ;
c) à homogénéiser indépendamment la première et/ou la deuxième dispersion ;
d) à mélanger lesdites première et deuxième dispersions homogénéisées et à homogénéiser ledit mélange jusqu'à ce que les particules de pigment soient encapsulées par des gouttelettes de monomère ; et
e) à initier la polymérisation des monomères,
dans lequel le dispersant de la deuxième dispersion est un polymère amphiphile choisi dans le groupe constitué : de polyvinylpyrrolidone ; de polyvinylpyrrolidone alkylée ; de polyéthylène glycol ; de poly(vinylpyrrolidone-co-acétate de vinyle) ; de poly(styrène sulfonate) ; de poly(chlorure de diallyldiméthylammonium) ; de poly(éthylène-co-acide méthacrylique) ; de poly(éthylène-co-acide maléique) ; de poly(styrène-co-acide maléique) ; de poly(vinylimidazole) ; des copolymères blocs et aléatoires des polymères susmentionnés ; et de leurs mélanges.

2. Procédé selon la revendication 1, dans lequel le monomère acrylique de la deuxième dispersion est choisi dans le groupe constitué : de l'acide acrylique ; de l'acide méthacrylique (MAA) ; du méthacrylate de méthyle (MMA) ; de l'acrylate de butyle (BA) ; de l'éthacrylate d'hydroxyéthyle (HEA) ; et du méthacrylate d'hydroxyéthyle (HEMA).

3. Procédé selon la revendication 1 ou 2, dans lequel lesdits au moins deux monomères polymérisables comprennent au moins un monomère acrylique et au moins un autre monomère qui est l'acétate de vinyle, le styrène ou un autre monomère non-acrylique comprenant une double liaison polymérisable.

4. Procédé selon la revendication 3, dans lequel le monomère non-acrylique comprenant une double liaison polymérisable est choisi dans le groupe constitué : de propionate de vinyle ; de butyrate de vinyle ; d'éther butylvinylique ; d'éther propylvinylique ; d'éthylène ; de vinylcarbazole ; de vinylnaphtalène ; de vinylanthracène ; de vinylpyrène ; d'alpha-méthylstyrène ; de diméthylstyrène ; de méthylstyrène ; de vinylbiphényl 2-méthyl-2-vinyl oxirane ; de vinylpyridine ; et de leurs mélanges.

5. Procédé selon l'une quelconque des revendications 1 à 4, dans lequel la deuxième dispersion comprend en outre un tensioactif et/ou un agent de réticulation.

6. Procédé selon l'une quelconque des revendications 1 à 5, dans lequel les première et deuxième dispersions sont toutes deux homogénéisées indépendamment.

7. Procédé selon l'une quelconque des revendications 1 à 6, dans lequel, à l'étape c) la première et/ou deuxième dispersion est/sont indépendamment homogénéisée(s) par sonication.

8. Procédé selon l'une quelconque des revendications 1 à 7, dans lequel, à l'étape d) l'homogénéisation est réalisée par sonication.

9. Procédé selon l'une quelconque des revendications 1 à 8, dans lequel la polymérisation est initiée :
par ajout, au mélange formé à l'étape d), de 0,01 à 5,0% en poids, par rapport au poids total des monomères présents, de persulfate d'ammonium ou de potassium ou d'un composé azoïque choisi dans le groupe constitué du 2,2'-azobisisobutyronitrile (AIBN), du dihydrochlorure de 2,2'-azobis(2-méthylpropionamidine) et du 2,2'-azobis(4-méthoxy-2,4-diméthylvaléronitrile) ; et
par élévation de la température du mélange à une température comprise entre 70° et 80°C.

10. Procédé selon l'une quelconque des revendications 1 à 9, dans lequel la polymérisation a lieu sous brassage ou agitation du mélange réactionnel.
